# EUROPÄISCHE PATENTSCHRIFT

(11) **EP 3 046 815 B1**
(45) Veröffentlichungstag und Bekanntmachung des Hinweises auf die Patenterteilung: **27.10.2021**
(21) Anmeldenummer: 14771263.2
(22) Anmeldetag: 16.09.2014
(51) Int. Cl.: B60T 8/40, B60T 13/74, F04B 5/02

(54) **ELEKTRISCH ANGETRIEBENE DRUCKREGEL- UND VOLUMENFÖRDEREINHEIT**
ELECTRICALLY-DRIVEN PRESSURE REGULATOR- AND VOLUME-DELIVERY UNIT
UNITÉ DE REFOULEMENT À DÉBIT VOLUMIQUE ET RÉGULATION DE PRESSION, À COMMANDE ÉLECTRIQUE

(30) Priorität: 16.09.2013 DE 102013110188; 30.10.2013 DE 102013111974
(43) Veröffentlichungstag der Anmeldung: 27.07.2016
(73) Patentinhaber: IPGate AG, 8808 Pfäffikon (CH)
(72) Erfinder: LEIBER, Heinz, 71739 Oberriexingen (DE); LEIBER, Thomas, 81675 München (DE); UNTERFRAUNER, Valentin, 80935 München (DE)
(74) Vertreter: Lenzing Gerber Stute
(86) Internationale Anmeldenummer: PCT/EP2014/069723
(87) Internationale Veröffentlichungsnummer: WO 2015/036623

(56) Entgegenhaltungen:
- DE-A1-102006 061 462
- DE-A1-102009 048 763
- DE-A1-102011 005 404

## Beschreibung

Die Erfindung betrifft eine elektrisch angetriebene Druckregel- und Volumenfördereinheit gemäß dem Oberbegriff des Patentanspruches 1.

### Stand der Technik

Stand der Technik sind Kolben- oder Zahnradpumpen, die in der Regel von Verbrennungsmotoren angetrieben werden und einen an die Drehzahl des Verbrennungsmotors fest gekoppelten Volumenstrom fördern. Ausführungsformen von Pumpen, die eine variable Förderleistung ermöglichen, sind Axialkolbenpumpen mit verstellbarer Schrägscheibe, bzw. variable Flügelzellenpumpen. Für eine bedarfsgerechte Förderung werden diese Pumpen elektrisch angetrieben.

Oben genannte Pumpen sind mechanisch sehr aufwändig und komplex aufgebaut und lassen aufgrund von relativ hoher Leckage keine exakte Druckregelung durch Motorpositionsreglung zu.

Bekannt sind ebenfalls Pumpen, basierend auf einem Doppelhubkolben, der durch Vor- und Rückwärtsbewegung fördert (Fahrradpumpenprinzip). Der Doppelhubkolben ist über zwei Rückschlagventile mit einem Vorratsbehälter verbunden und über zwei weitere Rückschlagventile mit dem Verbraucher. Doppelhubkolbenpumpen in einer elektrisch angetriebenen Form sind aus DE 10 2006 030 141.2 bekannt. Derartige Doppelhubkolbenpumpen sind deutlich einfacher aufgebaut als Axialkolbenpumpen und Flügelzellenpumpen.

Aus der DE 10 2011 080312 ist schließlich bereits eine Bremsanlage mit einem von einem Linearaktuator angetriebenen Doppelhubkolben bekannt, bei dem in den von den Druckkammern zu den Radbremsen führenden hydraulischen Leitungen Zuschaltventile angeordnet sind, wobei die hydraulischen Leitungen über ein nachgeschaltetes Ventil verbindbar sind.

Nachteil der Ausführung des Doppelhubkolbens aus DE 10 2011 080312 ist, dass die Hydraulikverbindung zwischen Vorder- und Rückseite des Doppelhubkolbens über drei Ventile führt, die eine große Drosselwirkung haben. Damit ist ein schnelles Umschalten zwischen Vor- und Rückhubbetrieb nicht möglich. Zudem ist es nicht möglich, im Vorhubbetrieb auf eine kleinere wirksame Fläche umzuschalten, da für eine derartige Funktion ein schneller Druckausgleich zwischen den Kammern erforderlich ist. In DE 10 2011 080312 wird lediglich der Effekt der unterschiedlichen Querschnittflächen dahingehend genutzt, dass im Rückhub ein höherer Druck erreicht werden kann (Anspruch 15). Ein dynamisches Umschalten zwischen Vor- und Rückhub ist in DE 10 2011 080312 nicht vorgesehen, zudem ist die Zuverlässigkeit des Wirkprinzips für einen Einsatz als Pumpe betrieben im Vor- und Rückhub gering.

Aus DE 10 2009 048 763 ist eine Anordnung zur Druckversorgung eines mit einer druckmittelbetätigten Kolben-Zylinder-Einheit mitbewegten Verbrauchers bekannt. Die Kolben-Zylinder-Einheit ist als Differentialzylinder ausgebildet, wobei zwischen dem wenigstens einen Verbraucher und einer Zylinderkammer des Druckzylinders wenigstens eine Ventileinheit geschaltet ist, über welche die Schaltzustände des Verbrauchers steuerbar sind.

### Aufgabe der Erfindung

Aufgabe der Erfindung ist, eine elektrisch angetriebene Druckregel- und Volumenfördereinrichtung mit hoher Förderleistung und genauer und dynamischer Drucksteuerung zu schaffen.

### Lösung der Aufgabe

Die Aufgabe der Erfindung wird durch die Merkmale des Patentanspruches 1 gelöst.

Mit der erfindungsgemäßen Lösung wird eine über einen Linearaktuator oder eine Motor-Getriebe-Einheit elektrisch angetriebene Druckregel- und Volumen-fördereinrichtung basierend auf Doppelhubkolbenprinzip geschaffen, die bedarfsgerecht genau Druck aufbauen bzw. Volumen fördern kann sowie ein schnelles Umschalten zwischen unterschiedlichen hydraulisch wirksamen Flächen ermöglicht. Dafür ist die Vermeidung von Drosselverlusten funktional entscheidend.

Dies kann durch eine Verbindung der Vorder- und Rückseite des Doppelhubkolbens über Schaltventile mit großen Durchflussquerschnitten sowie eine direkte Verbindung der Vorder- und Rückseite über eine kurze strömungsarme hydraulische Leitung ermöglicht werden, die im Bereich des Endhubes des Doppelhubkolbens der einen Kammer mit dem Anfangshub des Doppelhubkolbens der zweiten Kammer verbindet. Die Verbindungslänge ist damit näherungsweise so groß wie der gesamte Hub des Doppelhubkolbens. Für eine strömungsarme Gestaltung ist Doppelhubkolben und Verbindungsleitung sinnvollerweise Teil eines Hydraulikblockes, der durch Bohrungen die beiden Kammern verbindet. Das Schaltventil ist vorzugsweise ebenfalls im Hydraulikblock angeordnet. Alternativ können auch mehrere Ventile parallel geschaltet werden, um den Strömungswiderstand zu verbessern, bzw. Standardventile mit kleinerem Durchflussquerschnitt aus der Serienfertigung einzusetzen. Die Ventile müssen zudem für hohe Differenzdrücke ausgelegt sein. Durch Einsatz nur eines Ventiles bzw. Parallelschaltung von Ventilen statt dreier in Reihe geschalteter Ventile (DE 10 2011 080312) ist zudem die Zuverlässigkeit des Doppelhubkolben in Vor- und Rückhub gewährleistet. Bei Ausfall eines der dreier Ventile der DE 10 2011 080312 ist die Funktion nicht mehr gegeben, bei der erfindungsgemäßen Lösung ist die Zuverlässigkeit sehr hoch, zudem kann durch Parallelschaltung der Ventile eine vollständige Redundanz der Funktion erzielt werden.

Des Weiteren ist im Sinne der Optimierung (Downsizing des Linearaktuators) die Wahl der Querschnittsflächen zwischen Vorder- und Rückseite des Doppelhubkolbens entscheidend. Ein Verhältnis der Flächen zwischen Vorderseite und Rückseite des Doppelhubkolben im Verhältnis 1,5 bis 2,5, vorzugsweise 2 ist dabei zu wählen, um ein effektives Downsizing zu erreichen.

Mit der Erfindung bzw. ihren Ausführungen und Weiterentwicklungen können sowohl variable Förderleistungen als auch eine genaue Drucksteuerung realisiert bzw. funktional abgebildet wird.

Zudem kann mit der erfindungsgemäßen Lösung im Vorhub zwischen zwei unterschiedlichen Wirkquerschnitten hochdynamisch umgeschaltet werden. Da bei vielen Anwendungen im Kraftfahrzeug Druckaufbauunterbrechung funktional nicht gewünscht sind (beispielsweise muss der Druck von Bremssystemen 0 bis 120 bar ohne/ mit sehr geringer Unterbrechung des Druckaufbaus realisiert werden können), muss ein Umschalten auf eine zweite wirksame Fläche hochdynamisch erfolgen. Kann dies funktional umgesetzt werden durch Verbindung der beiden Kammern des Doppelhubkolbens über geringe Strömungswiderstände, kann die kleinere effektive Querschnittsfläche bei höheren Drücken genutzt werden, um den Kraft-/Drehmomentenbedarf des Linearaktuators bereits im Vorhubbetrieb zu reduzieren. Dies ermöglicht ein signifikantes Downsizing des Linearantriebs. Ein down-gesizter Linearaktuator hat zudem eine geringe bewegte Masse/Trägheitsmasse. Dies führt beim Umschalten zwischen Vor- und Rückhub zu weiteren Vorteilen.

Bei höheren Drücken (vorzugsweise >40% des Maximaldruckes) wird der Doppelhubkolben im Vor- und Rückhub betrieben. In diesem Betriebsmodus wirken sowohl im Vor- als auch Rückhub kleinere wirksame hydraulische Flächen. Das Umschalten zwischen Vor- und Rückhub erfolgt sehr dynamisch. Diese Regelstrategie kann beim Betrieb bei höheren Drücken angewandt werden, wo geringe Unterbrechungen des Druckaufbaus/Förderraten durch Umschalten von Vorhub- auf Rückhubbetrieb toleriert werden können. Die geringen Strömungswiderstände in Kombination mit der geringeren bewegten Masse/Trägheitsmasse des Linearaktuator minimieren beim Umschalten die Totzeit. Durch die kleineren Wirkflächen wird der Drehmomentbedarf des Linearaktuators reduziert, dadurch kann der Lineraktuator bei höheren Drehzahlen/Lineargeschwindigkeiten betrieben werden. Trotz des kleineren Linearaktuator können infolge der höheren Drehzahlen hohe Förderraten bzw. Druckaufbaugradienten realisiert werden. Zudem kann das Volumen der Doppelhubkolbeneinheit deutlich reduziert werden, wenn sowohl im Vor- als auch Rückhub gefördert werden kann.

Ferner wird eine genaue Drucksteuerung über Wegsteuerung eines Linearaktuators sowohl beim Druckaufbau als auch optional beim Druckabbau funktional umgesetzt. Dazu wird eine Druck-Volumen(Weg)-Kennlinie über einen Drucksensor als Modell abgebildet und zur Steuerung verwendet.

Alternativ zum Linearaktuator kann der Doppelhubkolben auch über eine Motor-Getriebe-Lösung betätigt werden. In diesem nicht näher ausgeführten Fall ist ein Getriebe zwischen Motor und Doppelkolbenzugstange angeordnet, die auch eine rechtwinklige Anordnung des Doppelhubkolbens relativ zum Motor ermöglicht.

Die erfindungsgemäße Einrichtung ermöglicht zudem, dass eine oder mehrere hydraulische Verbraucher mit hoher Effizienz mit Druck und Volumen versorgt werden, gleichzeitig ist eine genaue Regelung der Verbraucher gewährleistet. Primäre Anwendung sind hydraulische Verbraucher im Kraftfahrzeug.

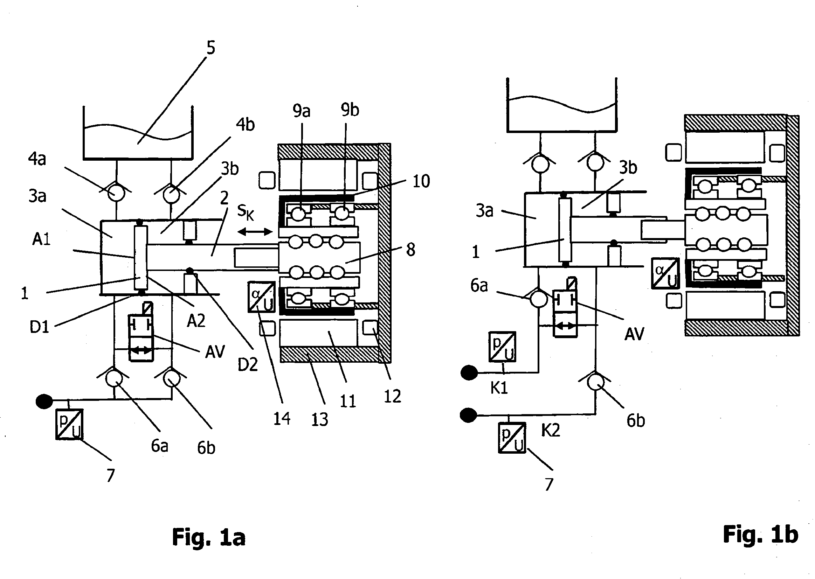

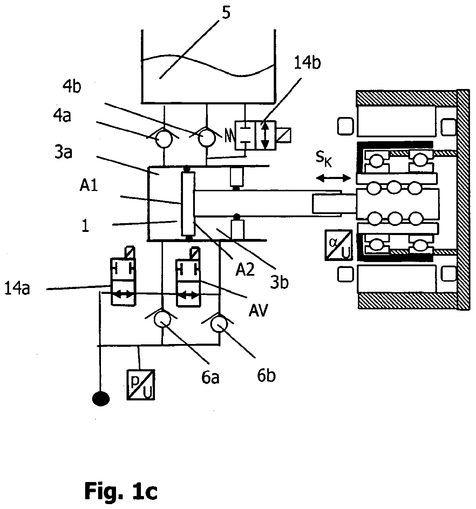

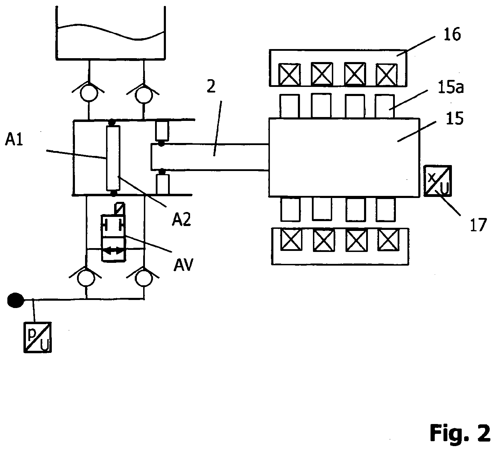

Vorteilhafte Ausführungen bzw. Weiterbildungen der Erfindung sind in den weiteren Ansprüchen enthalten auf die hier Bezug genommen wird. Mit der erfindungsgemäßen Lösung bzw. ihren Ausführungsformen und Weiterbildungen können mit anderen Worten unter anderem folgende Funktionen realisiert bzw. folgende Vorteile erzielt werden:
- variable Förderraten über Drehzahlsteuerung des Motors und schaltbare Wirkflächen sowohl im Vor- als auch Rückhub
- sehr hohe Förderraten im gesamten Druckbereich
- genaue Druckregelung durch Wegsteuerung statt Druckregelung über den Druck-Volumen/Weg-Zusammenhang sowohl im Druckaufbau (Ausführung Fig. 1a,1b,2) als auch Druckabbau (Ausführung Fig. 1c)
- Bedarfsgerechte energieeffiziente Druckerzeugung (Pressure-on-demand)
- Versorgung von mehreren hydraulischen Verbrauchern im Multiplexbetrieb durch Zu- und Abschalten der Verbraucher durch Ventile
- sehr kompakte, kostengünstige Druckvolumen und Fördereinheit durch Downsizing des Motors über Reduzierung des Kraft/ Drehmomentenbedarfs über zwei schaltbare hydraulische Querschnittsflächen
- sehr hohe Freiheitsgrade bei Optimierung von hydraulischen Systemen (Wegfall aufwändiger Ventile, Anschluss von mehreren Verbrauchern an eine Hydraulikquelle)

Durch die Freiheitsgrade und genaue Druckregelung können Ventilschaltungen von Verbrauchern vereinfacht werden (z.B. Ersatz aufwändiger Proportionalventile durch einfache Magnetventile), zudem kann der Linearantrieb durch die schaltbaren Wirkflächen signifikant vereinfacht werden.

In einer Variante werden zwei weitere schaltbare Ventile eingesetzt (Fig.1c), die eine Kammer des Doppelhubkolbens mit der Vorratskammer verbindet und ein Rückschlagventil ersetzt sowie in der Verbindung zwischen zweiten Kammer des Doppelhubkolbens mit dem Verbraucher verbinden und ein Rückschlagventil ersetzen.

An die Druckregel- und Volumenfördereinheit können mehrere Verbraucher angeschlossen werden, die über Magnetventile zu/ abgeschaltet werden können.

### Figurenbeschreibung

Die Erfindung ist anhand der Zeichnung in nachfolgenden Figuren näher beschrieben.

Es zeigen:
- **Fig.1a**: den Grundaufbau einer Druckregel- und Volumenfördereinheit (nachfolgend auch Druckerregeleinheit) mit Motor-Getriebeeinheit für die Druckversorgung eines Kreises;
- **Fig.1b**: den Grundaufbau der Druckregeleinheit mit Motor-Getriebeeinheit für die Druckversorgung von zwei Kreisen;
- **Fig.1c**: Erweiterung der Druckregeleinheit um Ventile zum Druckauf- und - abbau über Kolbenwegsteuerung;
- **Fig.2**: den Grundaufbau der Druckerzeugereinheit mit Linearaktorantrieb;
- **Fig.3**: Steuerstrategie bei Druckaufbau im Kolbenvorhub;
- **Fig.4**: Steuerstrategie bei Druckaufbau im Kolbenvor- und Rückhub;
- **Fig.5a**: Einfluss der Motorskalierung auf Drehzahl-Momenten-Kennlinien;
- **Fig.5b**: Leistungsverhalten der Druckregeleinheit durch Motordownsizing und Nutzung der schaltbaren Flächen;
- **Fig.5c**: Leistungsverhalten der Druckregeleinheit durch Motordownsizing und Nutzung der schaltbaren Flächen;
- **Fig.6**: Druckregelverfahren unter Berücksichtigung der schaltbaren Flächen;
- **Fig.7**: Einsatz der Druckregeleinheit für mehrere Verbraucher mit Druckabbau über Magnetventile; und
- **Fig.8**: Einsatz der Druckregeleinheit als zentrale Druckerzeugereinheit für ein Bremssystem.

**Fig.1a** zeigt den Grundaufbau einer Druckregel- und Volumenfördereinheit (nachfolgend auch Druckregeleinheit) bestehend aus einem beidseitig wirkenden Kolben 1 (nachfolgend auch Doppelhubkolben), der über einen Druckstange 2 in beide Richtungen über den Weg sk verschoben werden kann. Der Doppelhubkolben 1 begrenzt eine erste Druckkammer 3a mit der Wirkfläche A1 und eine zweite Druckkammer 3b mit der Wirkfläche A2. Das Verhältnis der Querschnitte der Flächen A1 und A2 ist näherungsweise 2:1, mindestens 1,5:1 und maximal 2,5:1.

Dieses Verhältnis entspricht näherungsweisen dem Verhältnis zwischen Maximaldruck und typischem Arbeitsdruck. Beide Kammern 3a, 3b sind über Rückschlagventile 4a und 4b mit einem Vorratsbehälter 5 verbunden. Die Rückschlagventile weisen einen großen Öffnungsquerschnitt auf, damit Drosselwirkungen vermieden werden. Zusätzlich ist zwischen den Kammern 3a, 3b ein schaltbares Druckausgleichsventil AV angeordnet.

Das schaltbare Ventil ist als Schaltventil, nicht Drosselventil ausgeführt und weist einen großen Durchflussquerschnitt auf. Zudem werden Vorder- und Rückseite des Doppelhubkolbens über kurze hydraulische Leitungen mit geringem Strömungswiderstand direkt verbunden. Der die Druckkammern bzw. die von diesen zum Verbraucher führenden hydraulischen Leitungen verbindende, das Schaltventil AV enthaltende Leitungsabschnitt ist möglichst kurz und beginnt zumindest an einer Druckkammer möglichst unmittelbar am Ausgang der Kolben-Zylinder-Einheit. Insbesondere sollen den Strömungswiderstand erhöhende Elemente, wie zusätzliche Ventile etc., in diesem Bereich möglichst vermieden werden. Alternativ können statt einem Schaltventil auch mehrere Schaltventile parallel geschaltet werden. Durch Parallelschaltung können Standardventile aus der Großserienfertigung eingesetzt werden. Durch Schalten des Druckausgleichsventils AV kann eine Verbindung zwischen Vorder- und Rückseite des Doppelhubkolbens 1 herstellt und im Vorhub unterschiedliche Wirkflächen durch Druckausgleich realisiert werden.

Die Druckregeleinheit hat Abhänge an einen Verbraucher über zwei weitere Rückschlagventile 6a und 6b, die einen großen Querschnitt aufweisen und beim Druckaufbau ohne elektrische Betätigung schnell geöffnet werden können.

Die AV-Ventile sind somit nur beim Umschalten zwischen Vor- und Rückhub, bzw. Umschalten der Querschnittsflächen belastet. Beispielsweise in der Anwendung der Druckregeleinheit in einem Bremssystem (36ccm Volumen) ist bei einem Umschalten bis 100 bar typischerweise ein Querschnitt des AV-Ventils von ca. 5 mm2 erforderlich.

Typische schnellschaltende Kugelsitzventile haben einen Querschnitt von 0,8-1,4 mm2. Müsste der Druckausgleich über 2 Ventile geführt werden (gemäß Stand der Technik DE 10 2011 080312), wäre bei einer Reihenschaltung der Ventile eine mindestens 4-fache Querschnittfläche der Ventile erforderlich. Berücksichtigt man dann zudem, dass 4 Leitungen die Ventile verbinden mit entsprechend zu berücksichtigenden Strömungs- und Ventilanschlusswiderständen, ist eine weitere Erhöhung der Querschnittsfläche erforderlich und ein schnelles Umschalten bei höheren Drücken technisch nicht umsetzbar.

Ein schnelles Schalten derartig großer Ventile ist technisch sehr schwer umsetzbar und sehr teuer und für den Normalbetrieb ohne Umschalten hinderlich. Derartig große Ventile schalten sehr langsam und müssen bei jedem Druck/ Fördervorgang aktiviert werden, sind daher bei jeder Druck/Volumenänderung belastet und somit in Anbetracht der Vielzahl der Betätigungen nicht fail-safe. Ein Ausfall eines Ventils führt zum Wegfall der Umschaltfunktion, was zu einem Ausfall des Gesamtsystems führen kann, da nicht mehr ausreichend Volumen für den Druckaufbau erforderlich ist bzw. die Förderung abgebrochen werden muss. Technisch ist somit entscheidend, dass AV-Ventil vor den Rückschlagventilen 6a und 6b angeordnet ist und der Volumenstrom zum Verbraucher nur über Rückschlagventile gefördert wird.

Zudem ist das AV-Ventil bei jedem Vorhub diagnostizierbar und Leckagen können frühzeitig erkannt werden. Im Abhang ist ferner ein Druckgeber 7 angeordnet. Die Druckregeleinheit wird über einen Motor-Spindel-Antrieb angetrieben. Der Motor-Spindeltrieb weist einen Kugelgewindetrieb 8 und einen über zwei Lager 9a und 9b gelagerten Motorrotor 10 auf, der mit Permanentmagneten bestückt ist. Die Rotordrehzahl und Winkelposition wird über einen Geber 14 ermittelt. Der Motor besitzt zudem einen Stator 11 mit Erregerspulen 12 und ist in einem Gehäuse 13 untergebracht. Zwischen Kammer 3a und 3b sind Dichtungen D1 am Doppelhubkolben 1 und zwischen Kammer 3b mit Wirkfläche A2 und Druckstangenkolben 2 Dichtungen D2 angebracht.

Der Doppelhubkolben 1 kann im Vor- und Rückhub betrieben werden. Im Vorhub wird bei geschlossenem Ventil AV die Fläche A1, bei geöffneten Ventil AV die Fläche A2-A1 wirksam, da ein Druckausgleich zwischen den beiden Kammern erfolgen kann. Im Rückhub ist das Ventil AV geschlossen und es wirkt die Fläche A2.

Zweckmäßigerweise ist das Verhältnis zwischen Fläche A1 und A2 näherungsweise Faktor 2, damit im Vor- und Rückhub mit der gleichen kleineren Fläche A2 geregelt werden kann und bei Umschalten keine Ausgleichsvolumenflüsse und Druckabfälle wirken.

**Fig.1b** zeigt den gleichen Grundaufbau wie Fig.1a mit dem Unterschied, dass das Rückschlagventil 6a vor dem Schaltventil AV angeordnet ist und zwei hydraulische Kreise K1 und K2 versorgt werden mit der Druckregeleinheit. Bei geschlossenem Ventil AV wird im Vorhub der Kreis 1 und im Rückhub der Kreis 2 mit Druck versorgt. Bei offenem Ventil AV wird im Vor- und Rückhub sowohl Kreis 1 und Kreis 2 gemeinsam versorgt. Die Zweikreisigkeit der Druckregeleinheit ist bei fehlerkritischen Systemen, bzw. Bremssystemen von hoher Bedeutung.

**Fig.1c** stellt eine Erweiterung der Druckregeleinheit aus Fig.la um zwei schaltbare Ventile 14a und 14b dar. Ventil 14a ist zwischen Druckkreis und vorderer Druckkammer 3a, Ventil 14b zwischen hinterer Druckkammer 3b und Vorratsbehälter 5 in einem Bypassleitungsabschnitt zur das Rückschlagventil 4b enthaltenden Leitung angeordnet.

Durch Öffnen der beiden Ventile 14a, 14b kann durch Rückhub des Doppelhubkolbens 1 der Druck über Wegsteuerung sk kontrolliert abgebaut werden.

**Fig.2** beschreibt die gleiche Druckregeleinheit wie Fig. 1a mit dem Unterschied, dass der Druckstangenkolben 2 über einen Linearaktor betätigbar ist, bestehend aus einen Anker 15 mit Permanentmagneten 15a, einem Stator mit Erregerspulen 16 und einen Linearwegsensor 17. Die Funktion ist die gleiche wie bei Fig.1a. Linearaktoren haben Vorteile im Vergleich zu Motor-Gewindetrieben, wenn der Doppelhubkolben auf kleine Hübe ausgelegt ist und geringe Kräfte im System auftreten.

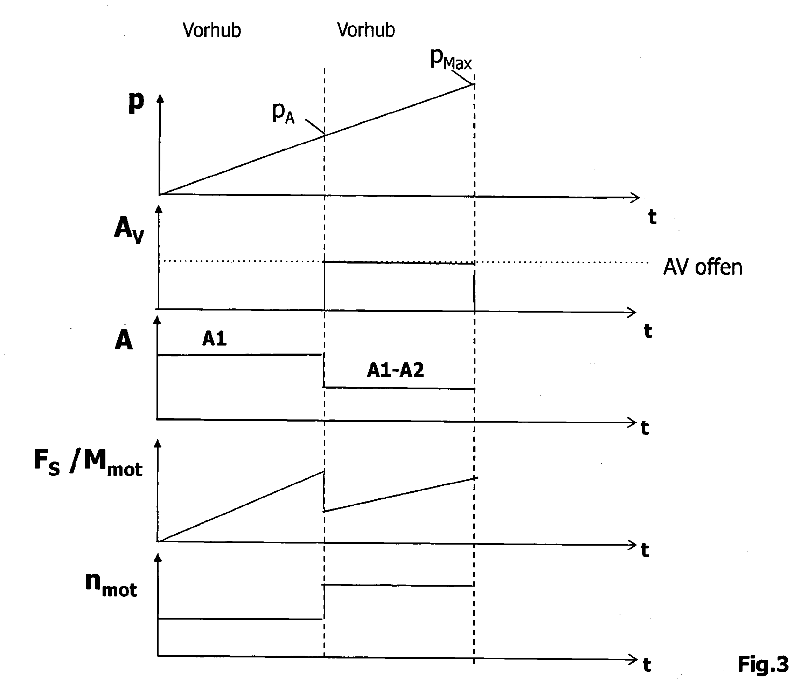

**Fig.3** beschreibt das Regelverfahren im Vorhub mit konstanter Förderrate mit den Kenngrößen Druck p, Schaltzustand des Ventils AV, wirkende Fläche A, Kolbenstangenkraft/ Motormoment und Motordrehzahl. In der Regel werden Pumpen oder Druckregeleinheiten auf den Maximaldruck pMax ausgelegt, wobei der nominale Arbeitsdruck pA in der Regel halb so groß ist.

Beispielsweise liegt der Blockierdruck bei Bremssystemen bei 80-100 bar, der Maximaldruck bei 180-200 bar. Die Druckerzeugereinheit wird sinnvollerweise in der Nähe des maximalen Arbeitsdruck pA von der wirksamen Fläche A1 auf die zweite Fläche A1-A2 durch Öffnen des Ventils AV umgeschaltet. Dies hat zur Folge, dass das Motordrehmoment/ die Druckstangenkraft im Verhältnis der Flächen A2/(A2-A1) reduziert wird. Um eine konstante Druckanstiegszeit aufrechtzuerhalten, muss die Motordrehzahl um das Verhältnis der Flächen erhöht werden. Dies ist in der Regel kein Problem, da Motoren bei niedrigeren Drehmomenten höhere Drehzahlen leisten können (siehe weitere Erläuterung

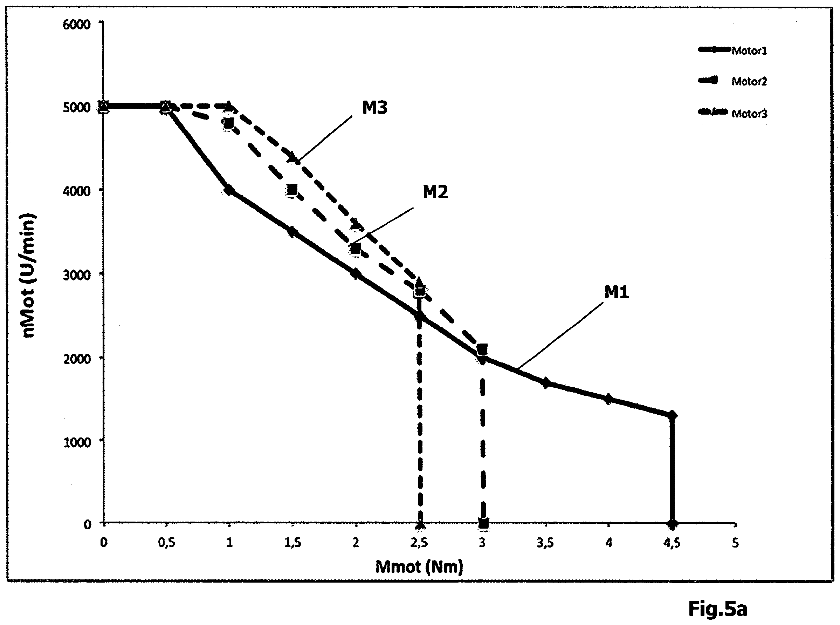

Fig. 5a bis Fig. 5c), bzw. die Förderraten bei hohen Drücken nicht mehr so groß sein müssen. Beispielsweise bei Bremssystemen ist die Druckanstiegszeit bis zum Blockierdruck 100 bar sehr wichtig für die Funktion, höhere Drücke können dagegen langsam aufgebaut werden ohne Einschränkung der geforderten Funktion.

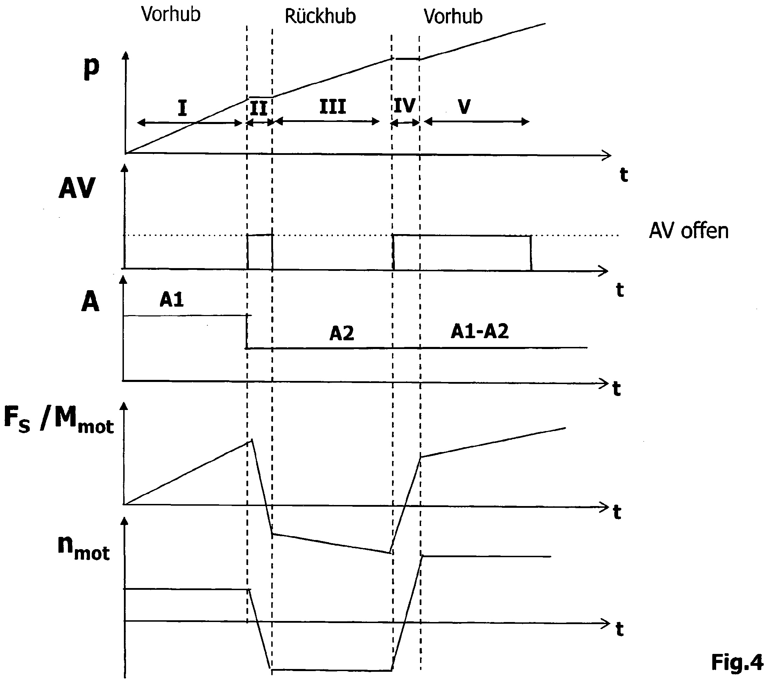

Fig. 4 beschreibt das Regelverfahren im Vor- und Rückhubbetrieb. Ein Betrieb mit Vor- und Rückhub ist deshalb vorteilhaft, da das Volumen der Druckerzeugereinheit geringer ausgelegt werden kann. In einer ersten Phase I wird im Vorhub mit der Wirkfläche A1, die näherungsweise doppelt so groß ist wie A2, mit einer konstanten Drehzahl Druck aufgebaut. In Phase II erfolgt das Umschalten auf Rückhub mit der geringeren Wirkfläche A2, bei dem der Motor die Drehrichtung ändert, gleichzeitig der Druckausgleich bei geöffnetem Ventil AV erfolgt. Der Motor wird entsprechend des Verhältnisses A2/A1, d.h. annähernd Faktor 2 auf höhere negative Drehzahl beschleunigt und die Kräfte/Momente halbieren sich. In der Phase des Umschaltens ist der Druck näherungsweise konstant. Da dies normalerweise sehr schnell erfolgt, liegt die Totzeit bei weniger als 10 ms und ist nicht spürbar. In Phase III erfolgt der weitere Druckaufbau im Rückhub bei geschlossenem AV-Ventil, bevor in Phase IV wieder umgeschaltet wird auf Vorhub für die weitere Förderung/ Druckaufbau in Phase V. In dieser Phase ändern sich die Vorzeichen der Kräfte und Moment und Drehzahlen. Bei einem Verhältnis A2/A1=2, ist A2 = A1-A2, daher ändert sich der Absolutwert der Drehzahlen/Drehmomente im Vergleich zu Phase III nicht. Die Umschaltung auf halbe Fläche hat zur Folge, dass das Drehmoment des Motors für deutlich geringe Maximalmomente ausgelegt werden kann, was zu essentiellen Kostenreduzierungen der Antriebseinheit führt. Dies ist in den nachfolgenden Fig. 5a-5c näher beschrieben.

**Fig. 5a** beschreibt den Zusammenhang einer Motorlängenskalierung auf der Drehzahl-Drehmoment-Charakteristik eines Elektromotors betrieben mit konstanter Spannung und limitiert auf maximale Drehzahl.

Diese Darstellung dient zum Verständnis des Optimierungspotentiales der erfindungsgemäßen Druckerzeugereinheit. Dargestellt sind drei Motorauslegungen mit unterschiedlichen Motorlängen (Motor M1: l=30 mm, Motor M2: l=20 mm, Motor M3: l=16 mm). Wird das Drehmoment reduziert über Längenreduziert, verringert sich die Drehmomentkonstante und die Drehzahl erhöht sich. Kleinere Motoren können bei kleineren Momenten höhere Drehzahlen erzeugen und haben keine Leistungseinbußen, im Gegenteil sogar in der Regel Leistungssteigerungen, insbesondere im Impulsbetrieb, wo thermischen Randbedingungen nicht von Bedeutung sind.

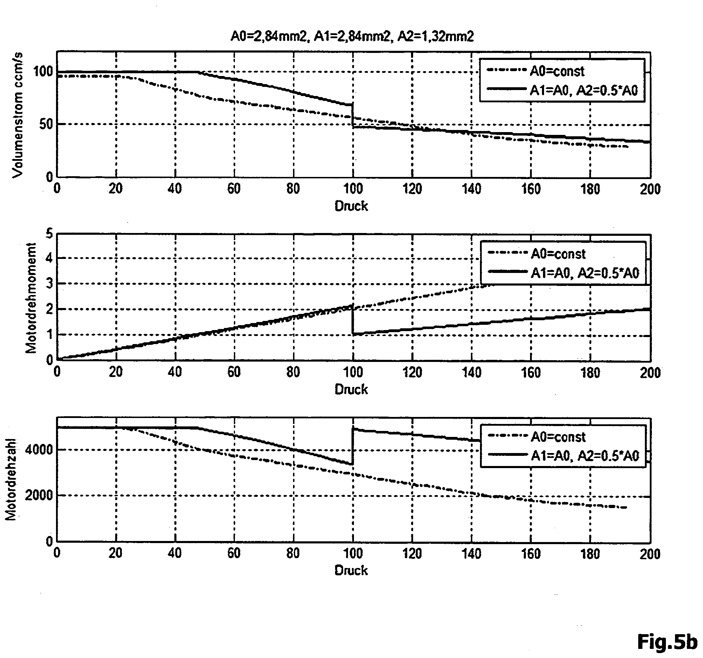

**Fig.5b** beschreibt das Potential der erfindungsgemäßen Druckregeleinheit mit zwei wirksamen Flächen in Zusammenhang mit einem downgesizten Motor. Dargestellt ist der Vergleich der Druckregelung mit einer konstanten Fläche A0 und dem Motor M1 im Vergleich zu einer Auslegung der erfindungsgemäßen Druckregeleinheit mit den Flächendimensionierung A1=A0 und A2=0,5^{∗}A1 und einem Einsatz des Motors M3 aus Fig.5a. Dargestellt ist Volumenstrom, Motordrehmoment und Motordrehzahl bei einem Betrieb bis 200 bar und einem Umschaltzeitpunkt bei 100 bar. Der Vergleich der Simulation zeigt, dass trotz Einsatz des kleineren Motors M3 bis zu 100 bar höhere Volumenströme erzeugt werden können und oberhalb von 100 bar der Volumenstrom annähernd vergleichbar ist, da der Motor höhere Drehzahlen auch bei hohen Drücken aufrecht erhalten kann. Das Motordrehmoment und letztlich die Druckstangenkraft ist nur halb so groß.

Dieser Effekt führt zu signifikanten Kostenvorteilen:
Einsatz eines Motors mit geringem Gewicht und Kosten sowie Reduzierung der Belastung des Kugelgewindetriebes, beides sind maßgebliche Kosten z.B. bei einem elektrischen Bremssystem. Zudem kann die Leistung gesteigert werden.

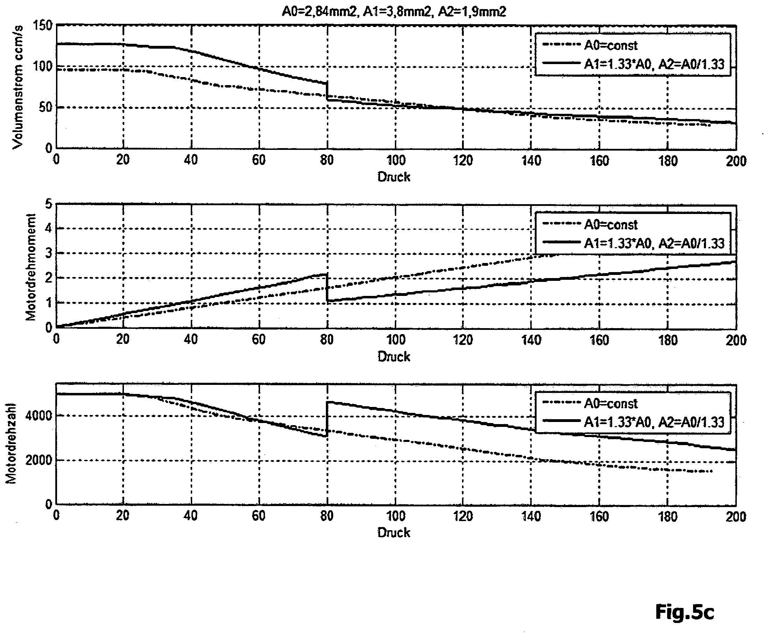

**Fig.5c** beschreibt die Auswirkung einer alternativen Auslegung. Wieder wird verglichen mit einer Auslegung mit konstanter Fläche und Motor M1. Diesmal wird die erfindungsgemäße Druckregeleinheit auf Fläche A1=1,33^{∗}A0 und A2=A0/1,33 als Auslegung genutzt und Motor M2 eingesetzt. Das Verhältnis A1/A2 ist 2 und die mittlere Fläche ist A0. Umgeschaltet wird diesmal bei 80 bar.

Diese Auslegung führt zu einer noch deutlicheren Förderratensteigerung im unteren Druckbereich. Dies ist bei Fahrzeugen mit großen und nicht steifen Verbrauchern (z.B. Bremssysteme mit Belaglüftspiel und weichen Bremssätteln) von großer Bedeutung. Bei derartigen Fahrzeugen ist ein schneller Druckaufbau im unteren Druckbereich gewünscht und besonders vorteilhaft, wenn ein System dies ermöglicht. So können Kosten und Gewicht z.B. bei Bremssätteln signifikant reduziert werden. Zudem ist immer noch ein erhebliches Gewichtseinsparungspotential durch Downsizing des Motors und des Kugelgewindetriebes gegeben.

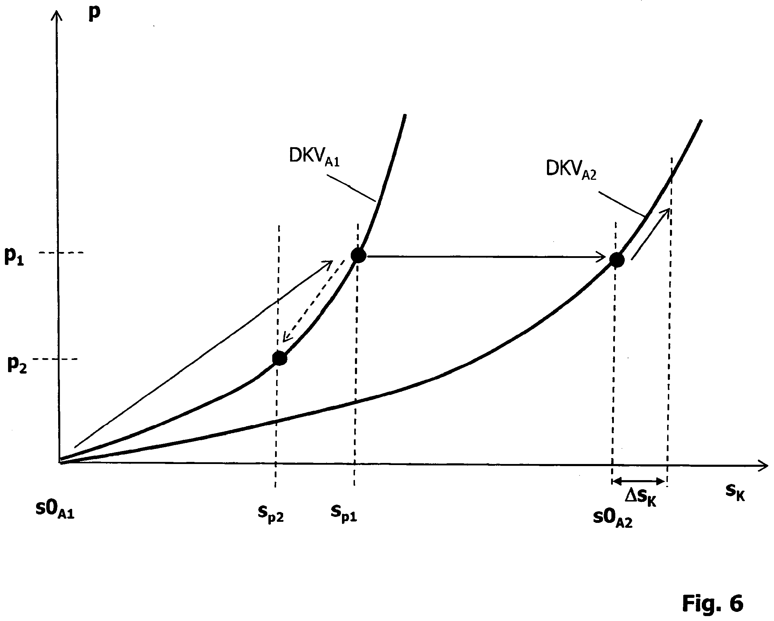

**Fig.6** beschreibt die Regelstrategie zur genauen Druckregelung über Abbildung einer Druck-Volumen (Weg)-Kennlinie in einem Zusammenhang zwischen Druckstangenweg sk und Druck p. Zur Abbildung der Druckvolumenkennlinie wird der Drucksensor 7 der Fig.1a, 1b, 1c, 2 genutzt. Im Betrieb kann die Druckvolumenkennlinie abgeglichen werden.

Ein Verhältnis der Kammerflächen des Doppelhubkolbens von A1/A2=2 ist in der Darstellung zugrunde gelegt. Der Druckaufbau beginnt von einem Ausgangsdruck s0A1 . Ein gewünschter Regeldruck p1 wird eingestellt durch Aussteuerung des Linearaktuators bis zur Position Sp1.

Bei der Regelung wird die Druck-Weg-Kennlinie zugrunde gelegt, die den nichtlinearen Zusammenhang zwischen Druck und Weg abbildet. Es können auch geringe Drücke als p1 über die Druckwegkennlinie eingesteuert werden. Bei Umschalten auf die Wirkfläche A2 verschiebt sich die Druckvolumenkennlinie. Es ergibt sich ein neuer Referenzweg s0A2. Druckänderungen können durch Einstellen von Differenzwegen Δsk eingestellt werden. Die weggesteuerte Druckregelstrategie hat den Vorteil, dass der Druck deutlich besser eingestellt werden kann, wenn die Regelung über Hub erfolgt und nicht über Nutzung des Drucksensors, da damit Druckschwingungen und Elastizitäten der Druckleitung nicht als Störgrößen die Regelung beeinflussen und keine hohen Anforderungen an die Genauigkeit von Druckgebern gestellt werden müssen. Wird die Druckregeleinheit gemäß Fig.1c eingesetzt, kann über die Wegsteuerung sk der Druck auch im Abbau über den Druck-Weg-Zusammenhang geregelt werden (gestrichelter Pfeil).

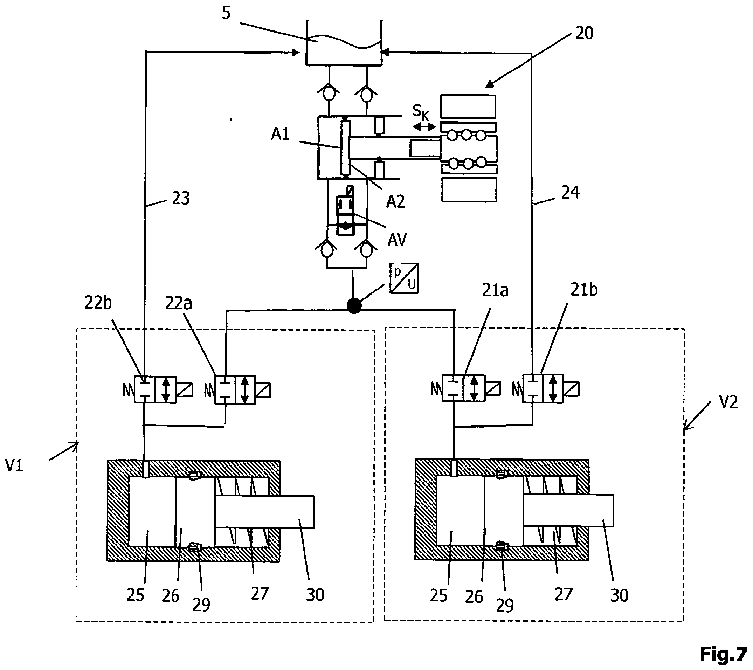

**Fig.7** beschreibt eine Anwendung der Druckregeleinheit 20 (gemäß Beschreibung in Fig.la) mit mehreren Verbrauchern V1 und V2. Jeder Verbraucher hat zwei Druckaufbauventile 21a und 22a und zwei Druckablassventile 21b und 22b, die mit einem Vorratsbehälter 5 über Leitungen 23 und 24 verbunden sind.

Angesteuert wird ein Wirkkolben mit einem Druckraum 25, einem Kolben 26, der über eine Feder 27 rückgestellt wird und einer Wirkstange 30, die über Dichtung 29 in einem Gehäuse gedichtet ist.

Der Druckaufbau erfolgt über die Ventile 22a und 21a mit genauer Drucksteuerung über Druck-Weg-Kennlinie, wodurch für die Funktion beider Systeme nur ein Druckgeber erforderlich ist. Der Druckabbau erfolgt über Zeitsteuerung der Auslassventile 21b und 22b, wobei die Auslassventile 21b und 22b als Drosselventile ausgeführt sind.

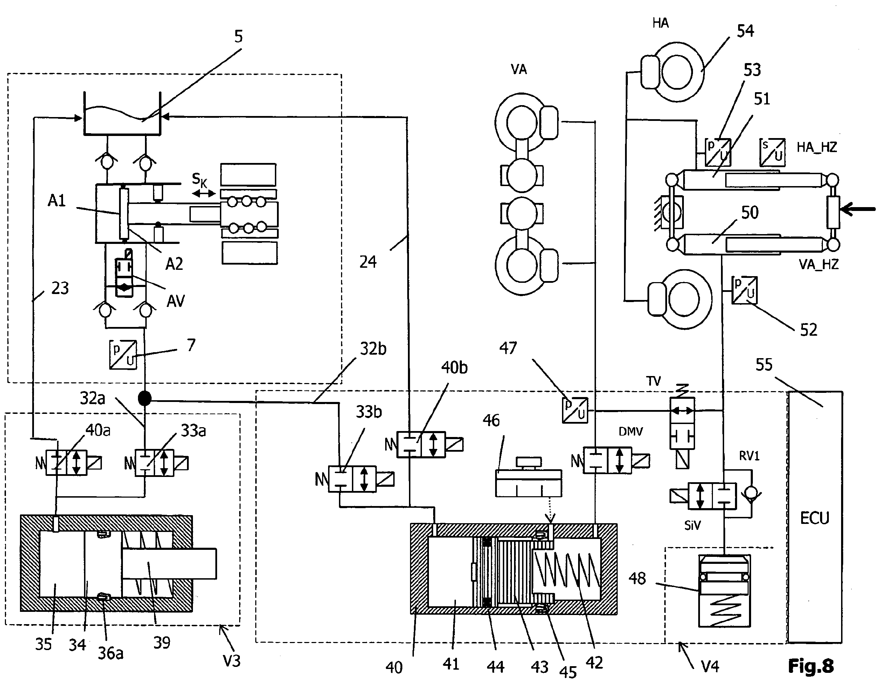

**Fig. 8** zeigt den Einsatz der Druckregeleinheit 20 im Einsatz als zentrale Druckversorgung für mehrere Verbraucher am Beispiel eines hydraulischen Gesamtsystems bestehend aus einem Bremssystem und weiteren Verbrauchern. Verbraucher V3 ist eine Einrichtung mit einer Stellkolben-Zylinder-Einheit 34 beispielsweise für eine Kupplungsbetätigung, Verbraucher V4 ist ein dezentrales Bremssystem, wie es beispielsweise im Rennsport für die Druckregelung der Achsen eingesetzt wird. Dezentrale Bremssysteme mit einer zentralen Druckquelle finden zunehmend Bedeutung im Rennsport, da ein Gewichtsvorteil erzielt werden kann, wenn mehrere Systeme mit einer zentralen Druckquelle versorgt werden. Die Druckregeleinheit ersetzt in diesem Fall eine Pumpe mit einem Hochdruckspeicher und ermöglicht den Entfall von sehr aufwändigen Proportionalventilen, da eine einfache Regelung über Schaltventile erreicht werden kann. Die Druckregeleinheit ist gemäß Fig.la ausgeführt, es kann aber auch die Druckregeleinheit gemäß Fig.1c und Fig. 2 eingesetzt werden. Die Druckregeleinheit hat einen zentralen Drucksensor 7 und ist über zwei Leitungen 32a und 32b und Magnetventile 33a und 33b mit der Stellkolben 34 des Verbrauchers V3 und dem Stellkolben-Zylinder-Einheit 40 des Bremssystems V4 verbunden.

Die Stellkolben-Zylinder -Einheit 34 besteht aus einer Druckkammer 35, Dichtungen 36, einem Druckkolben 37, der über eine Feder 38 rückgestellt wird. Ein Wirkkolben 39 überträgt die Kraft. Druck wird über Magnetventil 33a aufgebaut und über Magnetventil 40a abgebaut. Wird eine Druckregeleinheit gemäß Fig. 1c eingesetzt, einfällt das Magnetventil 40a und der Druck wird über das Magnetventil 33a auf- und abgebaut.

Die Stellkolben-Zylinder-Einheit 40 ist anders aufgebaut, da eine Medientrennung vorliegt. Insbesondere bei Bremssystemen ist eine Medientrennung zwischen Hydraulikkreis und Bremskreis erforderlich. Der Stellkolben 43 begrenzt daher einen mit Hydraulikflüssigkeit gefüllten Druckraum 41 und einen zweiten Druckraum 42 (mit Bremsflüssigkeit). Die Druckräume werden über den Stellkolben 43 und Dichtung 44 getrennt. Zusätzlich ist eine zweite Schnüffellochdichtung 45 vorgesehen, über die bei Rückstellung des Kolbens Bremsflüssigkeit aus einem weiteren Vorratsbehälter 46 nachgefördert werden kann.

Der Stellkolben überträgt über ein Druckminderventil den Druck auf die Vorderachse des Fahrzeuges. Zur Druckregelung ist ein weiterer Drucksensor 47 vorgehen. Druckaufbau erfolgt über das Ventil 33b, Druckabbau über Ventil 44b in den Vorratsbehälter. Wie bei Verbraucher V3 kann dieses Ventil entfallen, wenn die Druckregeleinheit gemäß Fig.1c eingesetzt wird. Der Druckaufbau und Druckabbau wird über Ventil 33b geführt.

Das Bremssystem enthält des Weitern ein Trennventil TV, einen Wegsimulator, ein Sicherheitsventil SiV. Über das Trennventil TV ist das Bremssystem mit einem Kreis 50 der Betätigungseinheit der Pedaleinheit 49 verbunden. Der zweite Kreis 51 ist mit der Hinterachse verbunden. Es sind weitere Drucksensoren 52, 53 sowie eine Wegsensor 54 des Pedalweges vorgesehen. Über den Wegsimulator wird die Druckregelung der Vorderachse gesteuert im aktiven Mode.

Im Fehlerfall (z.B. Ausfall Wegsimulator) wird das SiV geschlossen und das TV geöffnet. Zudem wird das Druckminderventil geschlossen. Dadurch wird die Pedalkraft dann direkt auf die Vorderachse übertragen.

Eine ECU ist zudem für das Bremssystem vorgesehen, in der die Ventilsteuerung und Auswertung der Drucksensoren erfolgt.

### Bezugszeichenliste

- 1: Kolben beidseitig wirkend bzw. Doppelhubkolben
- 2: Druckstangenkolben
- 3a: Erste Kammer; 3b Zweite Kammer
- 4a: Rückschlagventil
- 4b: Rückschlagventil
- 5: Vorratsbehälter
- 6a: Rückschlagventil
- 6b: Rückschlagventil
- 7: Druckgeber
- 8: Kugelgewindetrieb
- 9a: Lager
- 9b: Lager
- 10: Rotor
- 11: Stator
- 12: Erregerspulen
- 13: Gehäuse
- 14: Geber
- 15: Anker
- 15a: Permanentmagnete
- 16: Stator mit Erregerspulen
- 17: Linearwegsensor
- 20: Druckregeleinheit
- 21a: Druckaufbauventil
- 21b: Druckablassventil
- 22a: Druckaufbauventil
- 22b: Druckablassventil
- 23: Leitung
- 24: Leitung
- 32a: Leitung
- 32b: Leitung
- 33a: Magnetventil
- 33b: Magnetventil
- 34: Stellkolben-Zylinder-Einheit
- 35: Druckkammer
- 36: Dichtung
- 37: Druckkolben
- 38: Feder
- 39: Wirkkolben
- 40: Stellkolben-Zylinder-Einheit
- 41: Druckraum
- 42: Druckraum
- 43: Stellkolben
- 44: Dichtung
- 45: Schnüffellochdichtung
- 46: Vorratsbehälter
- 47: Drucksensor
- 48: Wegsimulator
- 49: Pedaleinheit
- 50: hydraulischer Kreis
- 51: hydraulischer Kreisen
- 52: Drucksensor
- 53: Drucksensor
- 54: Wegsensor
- 55: elektr. Steuer- und Regeleinheit (ECU)
- AV: Druckausgleichsventil schaltbar
- D1: Dichtung
- D2: Dichtung
- K1: hydraulischer Kreis
- K2: hydraulischer Kreis
- SiV: Sicherheitsventil
- Sk: Weg
- TV: Trennventil
- V1: Verbraucher
- V2: Verbraucher
- V3: Verbraucher bzw. Kupplungsbetätigung
- V4: Verbraucher bzw. Bremssystem

## Patentansprüche

1. Druck-Volumen-Fördereinrichtung mit einer Kolben-Zylinder-Einheit mit einem beidseitig wirkenden Kolben (1, 10, Doppelhubkolben), wobei dieser zumindest zwei unterschiedlich große Wirkflächen (A1, A2) aufweist und jede Wirkfläche (A1, A2) jeweils einem Druckraum (3a, 3b) des Kolbens (1, 10) zugeordnet ist , wobei die Druckräume (3a, 3b) über hydraulische Leitungen mit zumindest einem Verbraucher verbunden sind und mit einem Antrieb für die Kolben-Zylinder-Einheit, **dadurch gekennzeichnet, dass** die Druckräume (3a, 3b) und/oder die hydraulischen Leitungen über eine Verbindungsleitung mit einem oder mehreren parallel geschalteten Schaltventilen (AV) mit großem Durchflussquerschnitt verbunden sind und die Verbindungsleitung insbesondere kurz und mit geringem Strömungswiderstand ausgebildet ist.

2. Druck-Volumen-Fördereinrichtung, nach Anspruch 1, **dadurch gekennzeichnet, dass** in den Leitungen zum Verbraucher zum Verbraucher hin öffnende Rückschlagventile(6a,6b) mit insbesondere großem Öffnungsquerschnitt angeordnet sind, deren mindestens eines zwischen dem die Druckräume verbindenden und das Schaltventil (AV) aufweisenden Leitungsabschnitt und dem Verbraucher angeordnet ist.

3. Druck-Volumen-Fördereinrichtung, nach Anspruch 2, **dadurch gekennzeichnet, dass** eines der Rückschlagventile (6a) in dem die Druckräume verbindenden, das Schaltventil (AV) aufweisenden Leitungsabschnitt (zwischen Druckraum und Schaltventil AV) angeordnet ist (Figur 1b).

4. Druck-Volumen-Fördereinrichtung nach einem der vorhergehenden Ansprüche, **dadurch gekennzeichnet, dass** in einem einen Druckraum (3a) der Kolben-zylinder-Einheit (1) mit dem Verbraucher verbindenden Leitungsabschnitt ein weiteres Schaltventil (14a), insbesondere als Bypass zu Rückschlagventil (6a), angeordnet ist (Figur 1c).

5. Druck-Volumen-Fördereinrichtung nach einem der vorhergehenden Ansprüche, **dadurch gekennzeichnet, dass** in zumindest einer die Druckräume (3a,3b) der Kolben-Zylinder-Einheit (1) mit einem Vorratsbehälter (5) verbindenden hydraulischen Leitungen zum Vorratsbehälter hin schließende Rückschlagventile (4a, 4b), insbesondere mit großem Öffnungsquerschnitt, angeordnet sind.

6. Druck-Volumen-Fördereinrichtung nach Anspruch 5, **dadurch gekennzeichnet, dass** in einer der zum Vorratsbehälter (5) führenden Leitungen insbesondere der vom Druckraum (3b) mit kleinerer Wirkfläche ausgehenden Leitung, ein Schaltventil (14b) angeordnet ist, insbesondere in einer Bypasschaltung zum Rückschlagventil (4b).

7. Druck-Volumen-Fördereinrichtung nach einem der vorhergehenden Ansprüche, **dadurch gekennzeichnet, dass** die unterschiedlich großen Wirkflächen (A1,A2) des Doppelhubkolbens (1) in einem Verhältnis von 1,5 zu 1 bis 2,5 zu 1, insbesondere 2 zu 1 zueinander stehen.

8. Druck-Volumen-Fördereinrichtung nach einem der vorhergehenden Ansprüche, **dadurch gekennzeichnet, dass** der Antrieb einen Linearaktuator, insbesondere Linearmotor (15,16) oder Rotationsmotor (10,11,12) und Getriebe (8) aufweist.

9. Druck-Volumen-Fördereinrichtung nach einem der vorhergehenden Ansprüche, **dadurch gekennzeichnet, dass** zumindest ein Sensor vorgesehen ist, mit dem direkt oder indirekt (Drehzahl/Getriebeübersetzung)der Kolbenweg der Kolben-Zylinder-Einheit (1) gemessen wird.

10. Druck-Volumen-Fördereinrichtung nach einem der vorhergehenden Ansprüche, **dadurch gekennzeichnet, dass** die Fördereinrichtung zur Versorgung von mindestens zwei Verbrauchern ( V1, V2,V3,V4) hydraulisch mit diesen verbunden ist.

11. Druck-Volumen-Fördereinrichtung nach Anspruch 10, **dadurch gekennzeichnet, dass** zumindest einem Verbraucher je ein mit der Kolben-Zylinder-Einheit verbundenes Druckaufbauventil (21a,22a) und ein mit dem Vorratsbehälter (5) verbundenes Druckabbauventil(21b,22b) zugeordnet ist.

12. Druck-Volumen-Fördereinrichtung nach einem der vorhergehenden Ansprüche, **dadurch gekennzeichnet, dass** die Förderleistung der Kolben-Zylinder-Einheit (1) mittels Drehzahlsteuerung (Rotationsmotor) bzw. Hubzahlsteuerung (Linearmotor) des Motors erfolgt.

13. Druck-Volumen-Fördereinrichtung nach einem der vorhergehenden Ansprüche, **dadurch gekennzeichnet, dass** die Förderleistung/ der Druckaufbau der Kolben-Zylinder-Einheit (1) mittels des schaltbaren Ventils (AV) durch Änderung der schaltbaren Wirkflächen (A1, A2) im Vorhub verändert werden kann (A1, A1-A2) und die Fördereinrichtung im Vor- und Rückhub betrieben wird.

14. Druck-Volumen-Fördereinrichtung nach einem der vorhergehenden Ansprüche, **dadurch gekennzeichnet, dass** die Drucksteuerung insbesondere mittels Wegsteuerung des Doppelhubkolbens beim Druckaufbau und/oder beim Druckabbau erfolgt.

15. Druck-Volumen-Fördereinrichtung nach einem der vorhergehenden Ansprüche, **dadurch gekennzeichnet, dass** die Druckversorgung zumindest zweier Verbraucher im Multiplexbetrieb (MUX), insbesondere durch Abtrennen der Verbraucher mittels Ventilen, erfolgt.

16. Verfahren zur Druckversorgung zumindest eines Verbrauchers mit variabler Förderrate und/oder genauer Druckdosierung, unter Verwendung einer Druck-Volumen-Fördereinrichtung nach einem der vorhergehenden Ansprüche, **dadurch gekennzeichnet, dass** die Volumen- und/oder Druckdosierung mittels eines beidseitig wirksamen Kolbens mit unterschiedlichen Wirkflächen (Doppelhubkolbenprinzip) erfolgt.

17. Verfahren nach Anspruch 16, **dadurch gekennzeichnet, dass** das Ventil bzw. die Ventile (AV) nur beim Umschalten zwischen Vor- und Rückhub bzw. Umschalten der Wirkflächen betätigt werden und beim Druckaufbau mit großen Wirkflächen (A1) im Vorhub nicht betätigt werden.

18. Verfahren nach einem der Ansprüche 16 bis 17, **dadurch gekennzeichnet, dass** die Umschaltung von der größeren Wirkfläche (A1) des Doppelhubkolbens auf die kleinere Wirkfläche (A2) in der Nähe des maximalen Arbeitsdruckes in Normalbetrieb erfolgt, welcher näherungsweise Faktor 2 niedriger ist als der Maximaldruck des Systems.

19. Verfahren nach einem der Ansprüche 16 bis 18, **dadurch gekennzeichnet, dass** die Förderleistung des Doppelhubkolbens mittels Drehzahlsteuerung (Rotationsmotor) bzw. Hubzahlsteuerung (Linearmotor) des Motors erfolgt.

20. Verfahren nach einem der Ansprüche 16 bis 19, **dadurch gekennzeichnet, dass** die Druckregelung (Druckaufbau, Druckabbau) mittels Verwendung der Druck-Volumen-Kennlinie der Kolben-Zylinder-Einheit erfolgt.

21. Verfahren einem der Ansprüche 16 bis 20, **dadurch gekennzeichnet, dass** die Förderleistung des Doppelhubkolbens mittels Änderung der schaltbaren Wirkflächen (A1, A2) des Doppelhubkolbens im Vorhub des Doppelhubkolbens erfolgt und die Fördereinrichtung im Vor- und Rückhub insbesondere bei höheren Drücken betrieben wird.

22. Verfahren nach einem der Ansprüche 16 bis 21, **dadurch gekennzeichnet, dass** Vor- und Rückhub des Doppelhubkolbens mit gleichen Flächen (Differenz der Flächen A1-A2 ist gleich groß wie Fläche A2)) und zumindest zweimaligem Umschalten zwischen Vor- und Rückhub des Doppelhubkolbens beim Druckaufbau erfolgt.

23. Verfahren nach einem der Ansprüche 16 bis 22, **dadurch gekennzeichnet, dass** die Drucksteuerung insbesondere mittels Wegsteuerung des Doppelhubkolbens beim Druckaufbau und/oder beim Druckabbau erfolgt.

24. Verfahren nach einem der Ansprüche 16 bis 23, **dadurch gekennzeichnet, dass** die Druckversorgung zumindest zweier Verbraucher im Multiplexbetrieb (MUX), insbesondere durch Abtrennen der Verbraucher mittels Ventilen, erfolgt.

25. Betätigungsvorrichtung für eine Fahrzeugbremse, mit einer Betätigungseinrichtung, insbesondere einem Bremspedal, zumindest einer Kolben-Zylinder-Einheit (13), die über eine Hydraulikleitung mit einem Hydraulikkreis, insbesondere Bremskreis, verbunden ist um dem Hydraulikkreis Druckmittel zuzuführen und mit Druck zu beaufschlagen und mit einem Antrieb für die Kolben-Zylinder-Einheit (13), nach einem der vorhergehenden Ansprüche 1 bis 15, **dadurch gekennzeichnet, dass** zumindest ein, insbesondere gestuft ausgeführter, Kolben (10) der Kolben-Zylinder-Einheit (13) dem Hydraulikkreis gesteuert in beiden Kolben-Bewegungsrichtungen, insbesondere Vor- und Rückhub, Druckmittel zuführt.

## Claims

1. Pressure-volume delivery device having a piston-cylinder unit with a piston (1, 10, Doppelhubkolben) acting on both sides, this piston having at least two effective surfaces (A1, A2) of different size and each effective surfaces (A1, A2) being assigned to one pressure chamber (3a, 3b) of the piston (1, 10), the pressure chambers (3a, 3b) being connected via hydraulic lines to at least one consumer and with a drive for the piston-cylinder unit, **characterized in that** the pressure chambers (3a, 3b) and/or the hydraulic lines are connected via a connecting line to one or more switching valves (AV) connected in parallel, with a large flow cross section, and in particular the connecting line is designed to be short and with low flow resistance.

2. Pressure-volume delivery device, according to claim 1, **characterized in that** check valves (6a, 6b) which open towards the consumer are arranged in the lines to the consumer and have, in particular, a large opening cross section, of which at least one is arranged between the line section connecting the pressure chambers and having the switching valve (AV) and the consumer.

3. Pressure-volume delivery device according to claim 2, **characterized in that** one of the check valves (6a) is arranged in the line section (between the pressure chamber and the switching valve AV) connecting the pressure spaces and having the switching valve (AV) (Figure 1b).

4. Pressure-volume delivery device according to one of the preceding claims, **characterized in that** a further switching valve (14a), in particular as a bypass to the check valve (6a), is arranged in a line section connecting a pressure chamber (3a) of the piston-cylinder unit (1) to the consumer (Figure 1c).

5. Pressure-volume delivery device according to one of the preceding claims, **characterized in that** non-return valves (4a, 4b) closing towards a reservoir (5), in particular with a large opening cross section, are arranged in at least one hydraulic line connecting the pressure chambers (3a, 3b) of the piston-cylinder unit (1) with the reservoir.

6. Pressure-volume delivery device according to Claim 5, **characterized in that** a switching valve (14b) is arranged in one of the lines leading to the reservoir (5), in particular the line starting from the pressure chamber (3b) with a smaller effective surface, in particular in a bypass circuit to the non-return valve (4b).

7. Pressure-volume delivery device according to one of the preceding claims, **characterized in that** the differently sized effective surfacess (A1, A2) of the double-stroke piston (1) have a ratio of 1.5 to 1 to 2.5 to 1, in particular 2 to 1.

8. Pressure-volume delivery device according to one of the preceding claims, **characterized in that** the drive has a linear actuator, in particular linear motor (15,16) or rotary motor (10,11,12) and gear unit (8).

9. Pressure-volume delivery device according to one of the preceding claims, **characterized in that** at least one sensor is provided with which the piston travel of the piston-cylinder unit (1) is measured directly or indirectly (rotary speed/gear ratio).

10. Pressure-volume delivery device according to one of the preceding claims, **characterized in that** the delivery device is hydraulically connected to at least two consumers ( V1, V2,V3,V4) for supplying them.

11. Pressure-volume delivery device according to claim 10, **characterized in that** at least one consumer is assigned a pressure build-up valve (21a, 22a) connected to the piston-cylinder unit and a pressure reduction valve (21b, 22b) connected to the reservoir (5) each.

12. Pressure-volume delivery device according to one of the preceding claims, **characterized in that** the delivery capacity of the piston-cylinder unit (1) takes place by means of rotary speed control (rotary motor) or stroke rate control (linear motor) of the motor.

13. Pressure-volume delivery device according to one of the preceding claims, **characterized in that** the delivery capacity/pressure build-up of the piston-cylinder unit (1) can be changed (A1, A1-A2) by means of the switchable valve (AV) by changing the switchable effective surfaces (A1, A2) in the forward stroke and the delivery device is operated in the pre- and return stroke.

14. Pressure-volume delivery device according to one of the preceding claims, **characterized in that** the pressure control is carried out in particular by means of path control of the double-stroke piston during pressure build-up and/or during pressure reduction.

15. Pressure-volume delivery device according to one of the preceding claims, **characterized in that** the pressure supply to at least two consumers takes place in multiplex operation (MUX), in particular by separating the consumers by means of valves.

16. Method for supplying pressure to at least one consumer with variable delivery rate and/or precise pressure metering, using a pressure-volume delivery device according to one of the preceding claims, **characterized in that** the volume and/or pressure metering is carried out by means of a piston acting on both sides and having different effective surfacess (double-stroke piston principle).

17. Method according to claim 16, **characterized in that** the valve or valves (AV) are actuated only during switching between pre- and return stroke or switching of the effective surfaces and are not actuated during pressure build-up with large effective surfaces (A1) in the pre-stroke.

18. Method according to one of the claims 16 to 17, **characterized in that** the switchover from the larger effective surface (A1) of the double-stroke piston to the smaller effective surface (A2) takes place close to the maximum working pressure in normal operation, which is approximately a factor of 2 lower than the maximum pressure of the system.

19. Method according to one of the claims 16 to 18, **characterized in that** the delivery of the double-stroke piston is carried out by means of rotary speed control (rotary motor) or stroke rate control (linear motor) of the motor.

20. Method according to one of the claims 16 to 19, **characterized in that** the pressure control (pressure build-up, pressure reduction) is performed by using the pressure-volume characteristic of the piston-cylinder unit.

21. Method according to one of the claims 16 to 20, **characterized in that** the delivery capacity of the double-stroke piston takes place by means of changing the switchable effective surfaces (A1, A2) of the double-stroke piston in the pre-stroke of the double-stroke piston and the delivery device is operated in the pre-stroke and return stroke, in particular at higher pressures.

22. Method according to one of the claims 16 to 21, **characterized in that** the pre- stroke and return stroke of the double-stroke piston take place with equal surfaces (difference of the surfaces A1-A2 is equal to surface A2) and at least two switchovers between pre-stroke and return stroke of the double-stroke piston during pressure build-up.

23. Method according to one of the claims 16 to 22, **characterized in that** the pressure control is carried out in particular by means of path control of the double-stroke piston during pressure build-up and/or during pressure reduction.

24. Method according to one of claims 16 to 23, **characterized in that** the pressure supply to at least two consumers takes place in multi-plex operation (MUX), in particular by separating the consumers by means of valves.

25. Actuating device for a vehicle brake, having an actuating device, in particular a brake pedal, at least one piston-cylinder unit (13) which is connected via a hydraulic line to a hydraulic circuit, in particular a brake circuit, in order to supply pressure medium to the hydraulic circuit and to apply pressure to it, and having a drive for the piston-cylinder unit (13), according to one of the preceding claims 1 to 15, **characterized in that** at least one, in particular staggered, piston (10) of the piston-cylinder unit (13) supplies pressure medium to the hydraulic circuit in a controlled manner in both piston movement directions, in particular pre- and return stroke.

## Revendications

1. Équipement de refoulement pression-volume avec une unité piston-cylindre avec un piston agissant sur deux côtés (1, 10, piston à double course), dans lequel celui-ci présente au moins deux grandes surfaces actives (A1, A2) différentes et chaque surface active (A1, A2) est respectivement attribuée à une chambre de pression (3a, 3b) du piston (1, 10), dans lequel les chambres de pression (3a, 3b) sont reliées via des conduites hydrauliques à au moins un utilisateur et à un entraînement pour l'unité piston-cylindre, **caractérisé en ce que** les chambres de pression (3a, 3b) et/ou les conduites hydrauliques sont reliées via une conduite de liaison à une ou plusieurs vannes de commutation (AV) montées en parallèle et avec une grande section transversale d'écoulement, et la conduite de liaison est conçue en particulier courte et avec une résistance à l'écoulement restreinte.

2. Équipement de refoulement pression-volume, selon la revendication 1, **caractérisé en ce que** dans les conduites vers l'utilisateur sont agencés des clapets de non-retour (6a, 6b) s'ouvrant vers l'utilisateur avec en particulier une section transversale d'ouverture grande, dont au moins l'un est agencé entre la section de conduite reliant les chambres de pression et présentant la vanne de commutation (AV) et l'utilisateur.

3. Équipement de refoulement pression-volume, selon la revendication 2, **caractérisé en ce que** l'un des clapets de non-retour (6a) est agencé dans la section de conduite reliant les chambres de pression et présentant la vanne de commutation (AV) (entre chambre de pression et vanne de commutation AV) (Figure 1b).

4. Équipement de refoulement pression-volume selon l'une des revendications précédentes, **caractérisé en ce que** dans une section de conduite reliant une chambre de pression (3a) de l'unité piston-cylindre (1) à l'utilisateur est agencée une autre vanne de commutation (14a), en particulier en tant que dérivation par rapport au clapet de non-retour (6a) (Figure 1c).

5. Équipement de refoulement pression-volume selon l'une des revendications précédentes, **caractérisé en ce que** dans au moins une conduites hydraulique reliant les chambres de pression (3a, 3b) de l'unité piston-cylindre (1) à un récipient de stockage (5) sont agencés des clapets de non-retour (4a, 4b) se fermant vers le récipient de stockage, en particulier avec une section transversale d'ouverture grande.

6. Équipement de refoulement pression-volume selon la revendication 5, **caractérisé en ce que** dans l'une des conduites menant vers le récipient de stockage (5), en particulier la conduite partant de la chambre de pression (3b) et avec une surface active plus petite, est agencée une vanne de commutation (14b), en particulier dans un montage de dérivation par rapport au clapet de non-retour (4a).

7. Équipement de refoulement pression-volume selon l'une des revendications précédentes, **caractérisé en ce que** les grandes surfaces actives (A1, A2) différentes du piston à double course (1) sont dans un rapport entre elles de 1,5 pour 1 à 2,5 pour 1, en particulier 2 pour 1.

8. Équipement de refoulement pression-volume selon l'une des revendications précédentes, **caractérisé en ce que** l'entraînement présente un actionneur linéaire, en particulier un moteur linéaire (15, 16) ou un moteur rotatif (10, 11, 12) et une transmission (8).

9. Équipement de refoulement pression-volume selon l'une des revendications précédentes, **caractérisé en ce qu'**au moins un capteur est prévu avec lequel la course de piston de l'unité piston-cylindre (1) est directement ou indirectement (vitesse de rotation/rapport de transmission) mesurée.

10. Équipement de refoulement pression-volume selon l'une des revendications précédentes, **caractérisé en ce que**, pour l'alimentation d'au moins deux utilisateurs (V1, V2, V3, V4), l'équipement de refoulement est relié hydrauliquement à ceux-ci.

11. Équipement de refoulement pression-volume selon la revendication 10, **caractérisé en ce qu'**à au moins un utilisateur est respectivement attribuée une vanne de montée en pression (21a, 22a) reliée à l'unité piston-cylindre et une vanne de baisse de pression (21b, 22b) reliée au récipient de stockage (5).

12. Équipement de refoulement pression-volume selon l'une des revendications précédentes, **caractérisé en ce que** le refoulement de l'unité piston-cylindre (1) se produit au moyen d'une commande de vitesse de rotation (moteur rotatif) ou d'une commande de nombre de courses (moteur linéaire) du moteur.

13. Équipement de refoulement pression-volume selon l'une des revendications précédentes, **caractérisé en ce que** le refoulement/la montée en pression de l'unité piston-cylindre (1) peut être modifiée (A1, A1-A2) dans la précourse au moyen de la vanne (AV) pouvant être commutée par modification des surfaces actives (A1, A2) pouvant être commutées, et l'équipement de refoulement est exploité dans la précourse et la course de retour.

14. Équipement de refoulement pression-volume selon l'une des revendications précédentes, **caractérisé en ce que** la commande de pression se produit lors de la montée en pression et/ou de la baisse de pression en particulier au moyen d'une commande de déplacement du piston à double course.

15. Équipement de refoulement pression-volume selon l'une des revendications précédentes, **caractérisé en ce que** l'alimentation en pression d'au moins deux utilisateurs se produit en mode multiplexe (MUX), en particulier par séparation des utilisateurs au moyen de vannes.

16. Procédé pour l'alimentation en pression d'au moins un utilisateur avec un taux de refoulement variable et/ou un dosage de pression exact, en utilisant un équipement de refoulement pression-volume selon l'une des revendications précédentes, **caractérisé en ce que** le dosage de volume et/ou de pression se produit au moyen d'un piston agissant sur deux côtés avec des surfaces actives différentes (principe du piston à double course).

17. Procédé selon la revendication 16, **caractérisé en ce que** la vanne ou les vannes (AV) sont actionnées uniquement lors d'une commutation entre précourse et course de retour ou commutation des surfaces actives, et ne sont pas actionnées dans la précourse lors de la montée en pression avec de grandes surfaces actives (A1).

18. Procédé selon l'une des revendications 16 à 17, **caractérisé en ce que** la commutation de la surface active plus grande (A1) du piston à double course vers la surface active plus petite (A2) se produit à proximité de la pression de travail maximale en fonctionnement normal, laquelle est approximativement inférieure d'un facteur 2 à la pression maximale du système.

19. Procédé selon l'une des revendications 16 à 18, **caractérisé en ce que** le refoulement du piston à double course se produit au moyen d'une commande de vitesse de rotation (moteur rotatif) ou d'une commande de nombre de courses (moteur linéaire) du moteur.

20. Procédé selon l'une des revendications 16 à 19, **caractérisé en ce que** la régulation de pression (montée en pression, baisse de pression) se produit au moyen de l'utilisation de la courbe caractéristique pression-volume de l'unité piston-cylindre.

21. Procédé selon l'une des revendications 16 à 20, **caractérisé en ce que** le refoulement du piston à double course se produit dans la précourse du piston à double course au moyen d'une modification des surfaces actives (A1, A2) pouvant être commutées, et l'équipement de refoulement est exploité dans la précourse et la course de retour en particulier lors de pressions plus élevées.

22. Procédé selon l'une des revendications 16 à 21, caractérisé en ce la précourse et la course de retour du piston à double course se produit lors de la montée en pression avec des surfaces identiques (la différence des surfaces A1-A2 est de la même taille que la surface A2) et au moins deux commutations entre précourse et course de retour du piston à double course.

23. Procédé selon l'une des revendications 16 à 22, **caractérisé en ce que** la commande de pression se produit lors de la montée en pression et/ou de la baisse de pression en particulier au moyen d'une commande de déplacement du piston à double course.

24. Procédé selon l'une des revendications 16 à 23, **caractérisé en ce que** l'alimentation en pression d'au moins deux utilisateurs se produit en mode multiplexe (MUX), en particulier par séparation des utilisateurs au moyen de vannes.

25. Dispositif d'actionnement pour un frein de véhicule, avec un équipement d'actionnement, en particulier une pédale de frein, au moins une unité piston-cylindre (13) qui est reliée à un circuit hydraulique, en particulier un circuit de freinage, via une conduite hydraulique pour acheminer un moyen de pression vers le circuit hydraulique et solliciter par pression, et avec un entraînement pour l'unité piston-cylindre (13), selon l'une des revendication précédentes 1 à 15, **caractérisé en ce qu'**au moins un piston (10), en particulier configuré de façon étagée, de l'unité piston-cylindre (13), achemine un moyen de pression vers le circuit hydraulique, commandé dans les deux directions de mouvement de piston, en particulier précourse et course de retour.
